Europäisches Patentamt

European Patent Office

Office européen des brevets

(11) Veröffentlichungsnummer: **0 035 041**
A1

(19)

# EUROPÄISCHE PATENTANMELDUNG

(12)

(21) Anmeldenummer: 80100981.2

(22) Anmeldetag: 28.02.80

(51) Int. Cl.³: **G 08 G 1/09**, G 05 D 1/03, E 01 F 9/08

(43) Veröffentlichungstag der Anmeldung: 09.09.81
Patentblatt 81/36

(71) Anmelder: **Kirchberg, Otto Christian, Spanntal-Strasse 37 (Wolfshagen im Harz), D-3394 Langelsheim 3 (DE)**

(72) Erfinder: **Kirchberg, Otto Christian, Spanntal-Strasse 37 (Wolfshagen im Harz), D-3394 Langelsheim 3 (DE)**

(84) Benannte Vertragsstaaten: **AT BE CH DE FR GB IT LU NL SE**

(54) **Optische Signale und Alarm gebende Fahrspuren-Sicherungen für Kraftfahrzeuge.**

(57) Anordnung zum Folgen von Fahrspuren während der Nacht oder bei Nebel, bestehend aus einem in der Mitte der Fahrspuren verlegten, unter Netzspannung stehenden und als Sender arbeitenden Kabel und einem im Fahrzeug stehenden Empfänger und Anzeiger, der mit optischem und akustischem Alarm die Abweichungen des Fahrzeuges von der Mittelspur angibt.

Zum selben Zweck können eine Doppelreihe von Leitnägeln zwischen zwei Fahrspuren und Buckelleisten auf den beidseitigen Aussenspuren gelegt werden.

## Optische Signale und Alarm gebende Fahrspuren- Sicherungen für Kraftfahrzeuge.

Mit meinen Überlegungen verfolge ich das Ziel, den Verkehr auf Straßen für Kraftfahrzeuge auch bei ungünstigen Wetter- und Beleuchtungsverhältnissen möglich sicher ablaufen zu lassen.

Mein Vorschlag geht nun dahin, grundsätzlich für jede Spur mittig unter der Fahrbahndecke stromführende und mit einer noch festzulegenden Frequenz arbeitende Kabel zu verlegen. Die von diesem Kabel ausgehenden Impulse werden von einem Instrument, im Sichtkreis des Fahrers liegend, aufgenommen. Die Auswertung der Anzeige dieses Instrumentes gestattet dem Fahrer leicht festzustellen, ob er spurtreu fährt. Bei grober Abweichung von der Spur kann die vorgesehene optische Anzeige durch ein akustisches Signal ergänzt werden. Die Anlage, stromführendes und impulsgebendes Kabel in der Spurmitte und damit korrespondierendes Aufnahmegerät im Fahrzeug, gibt Sicherheit bei Nachtfahrten, Nebel und Regen, und das gilt auch für Überholmanöver und auch bei Gegenverkehr.

Wie der Fachpresse zu entnehmen ist, sollen durch unter der Fahrbahndecke zu verlegende Kabel den motorisierten Straßenbenutzern wegweisende Informationen in mehr oder weniger naher Zukunft überspielt werden. Diese Maßnahme mit meinem Vorschlag zu kombinieren, wäre m. E. eine lohnende Aufgabe, auch wenn das nur für die Verlegungsarbeiten genutzt würde.

Um die vorstehend umrissenen Maßnahmen zu realisieren, ist zwangsläufig eine längere Anlaufzeit erforderlich. Das war für mich der Grund Maßnahmen zu suchen, die schneller in die Tat umgesetzt werden können; s. folgendes Blatt.

- 2 -

Wie vorstehend bereits ausgeführt sind bei Dunkelheit und Nebel, aber auch bei Schnee und Regen, dann durch Übermüdung des Fahrers und aus manch anderen Gründen, Unfälle auf der Straße nicht vermeidbar. Erhöhte Gefahren ergeben sich durch Nachwuchsfahrer ohne ausreichende Erfahrung im Straßenverkehr; Alkoholsünder und durch Einnahme von Medikamenten Kranke sollen nicht unerwähnt bleiben.

Gefahren gelten auch durch das Fehlen von Bäumen als Straßenbegrenzungen, denn die mit Rückstrahlern versehenen Leitposten an den Straßenrändern sind beispielsweise bei Schneefall durch Überdeckung nicht immer erkennbar. Aus diesem Grunde sind auch Grenzsteine unfallträchtig.

Durch Versuche mit Leitnägeln in besonderer Ausführung und Anordnung habe ich festgestellt, daß man besonders in kritischen Verkehrssituationen neben der Fahrbahnbeobachtung zu einer über das Optische weit hinausgehenden Signalwirkung und damit zu einer guten Absicherung kommt, wenn die Straßen -- hauptsächlich Bundesautobahnen und stark belastete Fernverkehrsstraßen -- nach der Skizze auf dem beigegebenen Blatt 8 ausgestattet werden. Anstelle von Leitnägeln empfehlen sich Buckelleisten, wie solche auf dem vorbezeichneten Blatt dargestellt sind und deren Anordnung aus dem Blatt 9 ersichtlich ist.

Auf der Skizze sind je Leiste 3 Reihen Buckel vorgesehen, die, wie aus der Skizze 8 zu entnehmen, rechts und links an den Fahrbahngrenzen anzuordnen sind. Die jeweils den Fahrbahnen zugekehrte Buckelreihe ist verhältnismäßig wenig gewölbt und niedrig, außerdem mit einem Mittenabstand von ca. 600 mm sparsam besetzt. Dem diese Reihe anfahrenden Wagenlenker soll durch das zwangsläufig einsetzende Rütteln ACHTUNG signalisiert werden, fährt er weiter nach rechts und erreicht die mittlere Buckelreihe, die etwas höher ausgelegt ist und die doppelte Anzahl Buckel aufweist, soll durch die stärkere Mittelwirkung dem Fahrer VORSICHT durchgegeben werden. Bei weiterem Rechtsfahren

und nach dem Erreichen der dritten, höheren und dicht an dicht besetzten Buckelreihe gilt für den Fahrer das Signal GEFAHR ! Zwischenzeitlich durchgeführte Versuche ergaben übrigens, daß das Höhen-Differenzmaß, welches in der Skizze mit 30 mm angenommen wurde, auf den halben Wert zurückgenommen werden kann; Vorteile wären besseres Rücküberklettern nach Überfahren aller drei Buckelreihen, außerdem bei Oberwasser wird die Pfützenbildung im Bereich der Buckelreihen durch entsprechende Modellausbildung unmöglich gemacht.

Die abgestuften Rüttelwarnungen können zusätzlich optisch und/oder akustisch ergänzt werden. Durch die Schräglage der Fahrzeuge auf den Buckeln sind durch verhältnismäßig einfache Maßnahmen optische und/oder akustische Signale auszulösen, die beispielsweise als kräftiger Pfeifton bis zur sicheren Weckgrenze gesteigert werden können. -- Damit ist über die Außenfahrbahnbegrenzung wohl alles gesagt.

Wieder auf das Skizzenblatt mit der laufenden Nummer 9 zurückgreifend, ist es mein Vorschlag bei zwei- oder mehrspurigen Straßen -- in der Skizze ist eine zweispurige Straße gewählt -- durch Zweireihennagelung mit normalen, besser jedoch mit etwas höheren Leitnägeln eine gute Trennung der Spuren zu erreichen. Der Abstand der Nagelung ist so zu wählen, daß eine gewisse Überkragung der Fahrzeugaufbauten berücksichtigt wird, wie das aus dem beigegebenen Blatt ersichtlich ist.

Beim Befahren von Autobahnen kann man immer wieder starke Deformationen an Leitplanken feststellen. Die von mir empfohlenen Buckelleisten wären m. E. gut geeignet, solche Beschädigungen nicht nur an den Leitplanken zu vermeiden, sondern auch an den diese Beschädigungen auslösenden Fahrzeugen. Die Gefahr das Fahrpersonal, das Fahrzeug und die

Ladung sicherer über die Straße zu bringen, ist m. E.
durch die von mir erdachten und vorstehend beschriebenen
Einrichtungen gegeben.

( O. C. Kirchberg )

3394 Langelsheim 3    23. Februar 1980
(Wolfshagen im Harz)

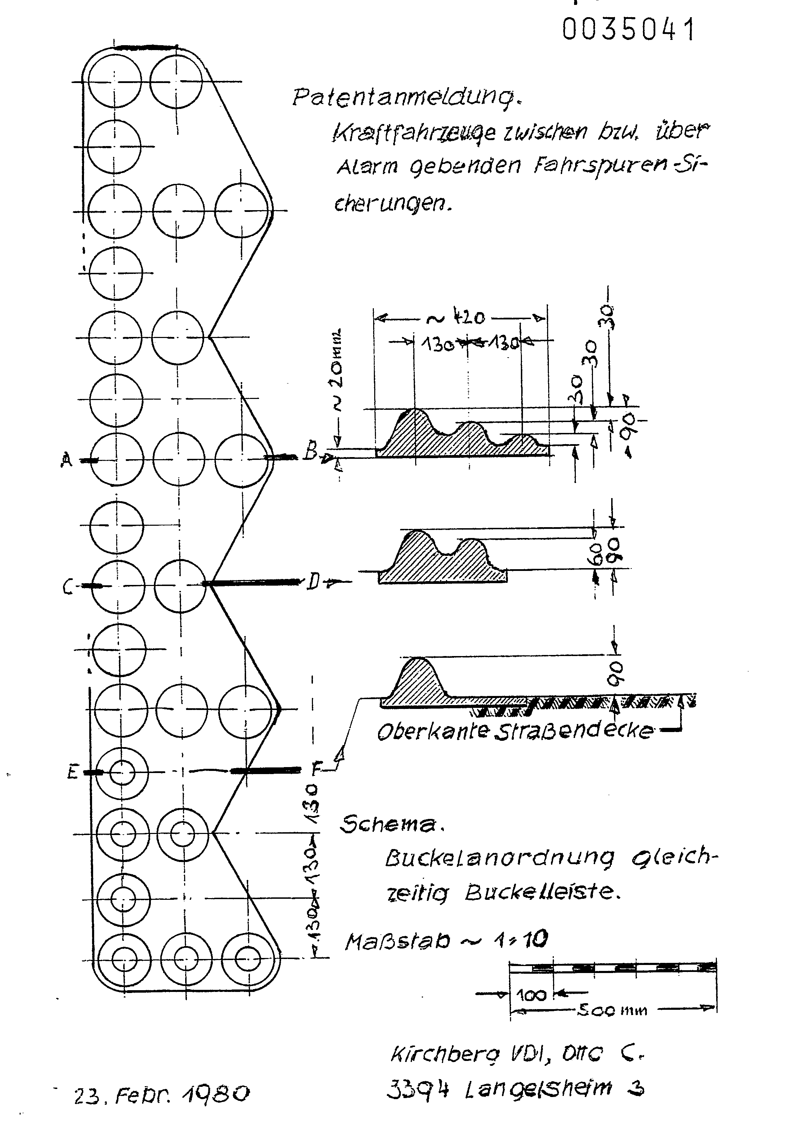

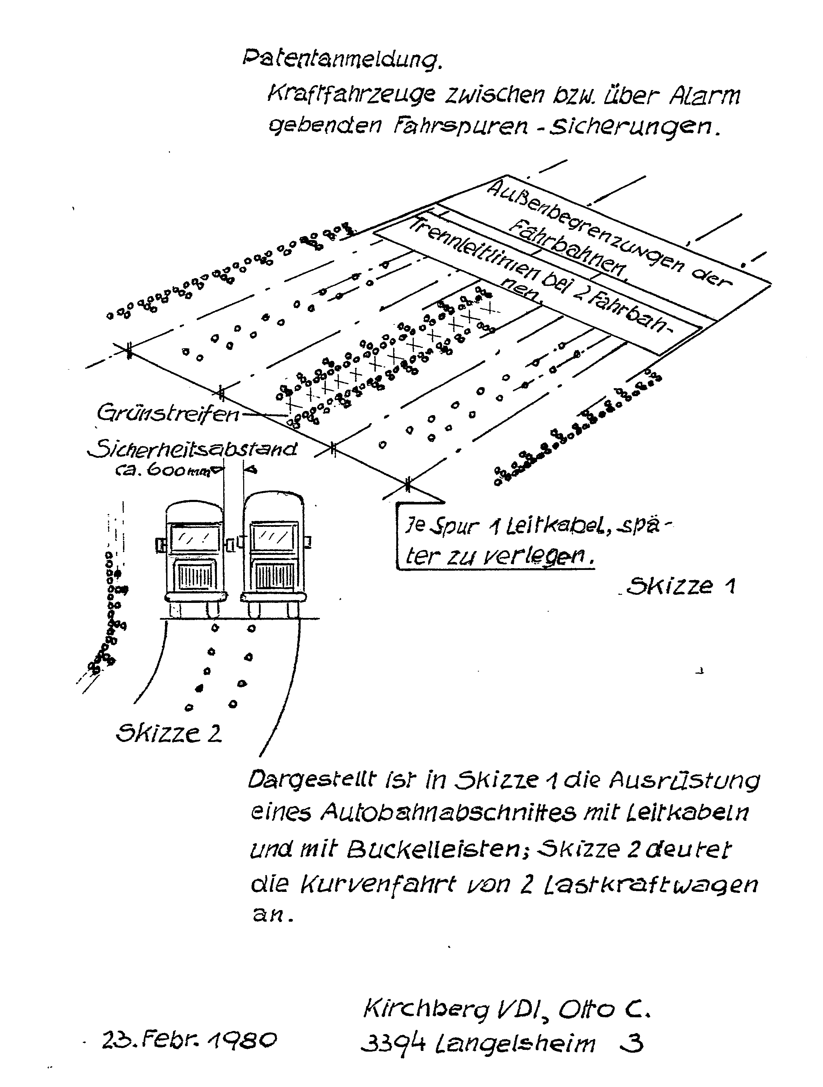

Patentansprüche

1. Optische Signale und Alarm gebende Fahrspuren-Sicherungen für Kraftfahrzeuge bestehend aus einem jeweils in der Mitte der Fahrspuren verlegten Kabel, das unter Netzspannung steht und mit einer noch freizugebenden Frequenz betrieben wird. Die Kabel arbeiten als Sender und sprechen ein jeweils in den Fahrzeugen installiertes Empfangsgerät mit der Anzeigebereitschaft

a) Zeiger senkrecht oder Kontrollpunkt in der Mitte der Skala                     = spurtreu

b) Zeiger oder Kontrollpunkt nach rechts oder links ausschlagend                     = spuruntreu (Korrektur unter Auswertung des Anzeige-Ausschlags erforderlich)

c) Das Instrument so ausgelegt, daß bei zu starker Abweichung von der Spurmitte ein akustisches Signal ertönt.

2. Optische Signale und Alarm gebende Fahrspuren-Sicherungen nach Patentanspruch 1 , jedoch auf mechanischer Basis aufgebaut bestehend aus

d) Zwischen den einzelnen Fahrspuren angeordnet und parallel verlaufende Leitnägel-Doppelreihen.

Diese Leitnägel-Doppelreihen müssen in bezug auf den Abstand des Überragen von Lastkraftwagenaufbauten berücksichtigen und zwar derart, daß auch knapp an die Nagelköpfe heranfahrende Wagen, insbesondere Lastkraftwagen, ohne zu kollidieren bei Überholmanövern und Gegenverkehr sicher passieren können.

3. Die beiderseitigen Außenspuren der in den meisten Fällen zwei oder auch mehr Spuren aufweisenden Straßen sollen nach meinen Vorschlägen mit Buckelleisten besetzt werden, die aufgrund ihrer Formgebung, sh. Blätter 8 und 9 schon durch die unterschiedliche Rüttelwirkung die steigende Gefahr melden. Zusätzlich können durch die nach

außen ansteigende Höhe der Buckel und daraus resultierender Schräglage der Fahrzeuge, aber auch durch die sich steigernde Mittelfrequenz, einfache Schaltelemente verwandt werden, die im Sichtbereich des Fahrzeuglenkers angebracht und durch akustische Signalgeber ergänzt werden können. Verwiesen wird noch einmal auf die nachgehefteten Skizzenblätter.

Patentanmeldung.

Kraftfahrzeuge zwischen bzw. über Alarm gebenden Fahrspuren-Sicherungen.

~ 420

130   130

30   30

30

30

90

~ 20mm

A        B

60   90

C        D

90

E        F

Oberkante Straßendecke

Schema.

Buckelanordnung gleichzeitig Buckelleiste.

130   130   130

Maßstab ~ 1:10

100

500 mm

Kirchberg VDI, Ottc C.

3394 Langelsheim 3

23. Febr. 1980

Patentanmeldung.

Kraftfahrzeuge zwischen bzw. über Alarm
gebenden Fahrspuren - Sicherungen.

Grünstreifen

Sicherheitsabstand
ca. 600 mm

Je Spur 1 Leitkabel, später zu verlegen.

Skizze 1

Skizze 2

Dargestellt ist in Skizze 1 die Ausrüstung
eines Autobahnabschnittes mit Leitkabeln
und mit Buckelleisten; Skizze 2 deutet
die Kurvenfahrt von 2 Lastkraftwagen
an.

23. Febr. 1980

Kirchberg VDI, Otto C.
3394 Langelsheim 3

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | <u>US - A - 3 550 077</u> (SWIFT)<br>  * Spalte 1, Zeile 51 bis Spalte 2, Zeile 29 * | 1 | G 08 G 1/09<br>G 05 D 1/03<br>E 01 F 9/08 |
| | <u>GB - A - 1 025 355</u> (NATIONAL RESEARCH DEV.)<br>  * Seite 1, Zeilen 11-20; Seite 1, Zeilen 44-53; Seite 2, Zeilen 54-35 * | 1 | |
| | <u>DE - C - 932 171</u> (OGLIETTI)<br>  * Seite 1, Zeile 1 bis Seite 2, Zeile 17 * | 1 | RECHERCHIERTE SACHGEBIETE (Int. Cl.) |
| A | <u>GB - A - 422 120</u> (OMES)<br>  * Seite 1, Zeilen 64-70 * | 2 | G 08 G 1/16<br>       1/09<br>G 05 D 1/03<br>E 01 F 9/04<br>       9/06<br>       9/08<br>E 01 C 11/22 |
| | CIVIL ENGINEERING CONSTRUCTION EQUIPMENT DIGEST, Band 5, Nr. 3, März 1966, London, GB, "The longford fog warning kerb", Seite 31<br>  * Das ganze Dokument * | 3 | |
| | <u>DE - A - 2 618 529</u> (SIEBERT)<br>  * Das ganze Dokument * | 3 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 31-10-1980 | SGURA |

EPA Form 1503.1 06.78

BAD ORIGINAL